# EUROPEAN PATENT APPLICATION

(11) **EP 3 187 233 A1**
(43) Date of publication of application: **05.07.2017**
(21) Application number: 15460140.5
(22) Date of filing: 30.12.2015
(51) Int. Cl.: A63B 71/06, A63B 24/00, G06K 9/00, G06T 7/00, G06K 9/60, G06K 9/62, G06T 7/20, G06F 17/30, G06K 9/46, H04N 21/845, H04N 21/8545, H04N 21/8549, H04N 21/431

(54) **THE VIDEO-BASED VERIFICATION SYSTEM FOR THE BALL-LINE EVENTS FOR THE REFEREES OF THE NETBALL MATCHES**

(71) Applicant: TDS Polska Sp. z o. o., 02-495 Warszawa (PL)
(72) Inventor: Kielek, Radoslaw, 02-964 Warszawa (PL); Wichniewicz, Radoslaw, 02-496 Warszawa (PL)
(74) Representative: Kaminski, Zbigniew

(57) **Abstract**

In the video-based verification system for the ball-line events for the referees of the netball matches equipped with the cameras as well as image processing equipment, first of all the positions of the ball in relation to the playground border line are calculated with the use of the Otsu algorithm (Module 3), as well as the image thresholds and its segmentation, and subsequently, on the basis of this algorithm, the resulting image is processed with the use of the computer with the Hough transformation for a line and a circle implemented (Module 4); afterwards the result of these calculations generates the final graphical image divided into two sections and presenting the real picture of the ball hitting the playground near the border line and displaying the image on the referees' screen, whilst all these actions are done in real time during the match break.

## Description

The object of the invention is the video-based verification system for the ball-line events for the referees of the netball matches, when the referee, during the netball match is supposed to make a prompt decision on the position of the ball when it hit the ground, with the use of high-resolution cameras. In order to support the referee and avoid erroneous decisions that may affect the score of the game, there has been and applied in hardware of the optimised video-based verification system, an innovative algorithm to find and automatically trace the ball in almost real time.

The object of the invention points to the software methodology as well to process and present synchronous video stream and near real time simulation, i.e. initially with the delay of 1 (one) minute between the request to verify the ball-line event that is necessary to start the video browsing system, and then to replay in almost real time the post-frame image recorded by the system and make a simulation of the situation being verified.

The European patent No EP 1347807B1 describes a system to visualise the border lines on the tennis courtin order to define the hit point of the ball in relation to the border line of the court. However, this system does not present the video stream available to anyone, but *solely the computer-generated simulation of the virtual hit of the ball* against the court or outside of it. The disadvantage of this system is the fact that the correctness of the visualisation can be, and is often, challenged.

The system described here, used for the netball, does not have this disadvantage: it primarily refers to the real images taken, and the simulation presented is simultaneous and coherent with the images, what's more it is set up independently of the specific match and is performed automatically by the computer without any human intervention.

In order to realise the system's functionality, the algorithm has been prepared. It consists of 4 software modules written in Open CV / Python computer languages. These are: as follows
1. The software to adapt the load, store, search and display procedures for the short video films to the hardware configuration.
   1.1.Drawing the static images.
   1.2. Creating animated images that are post-frame synchronised with the video images.
2. Adaptation and parameterisation of the video image processing procedures.
   2.1. Translation
   2.2. Rotation
   2.3. Size change
   2.4.Pane
   2.5.Zoom
   2.6. Masking
   2.7.Image arithmetic
3. Software coding in Open CV / Python for the Otsu algorithm
   3.1.Bitmaps and bitwise operations
   3.2.Filter kernels and image arrays
   3.3. Split and merge channels
   3.4.Morphological operations
   3.5. Smoothing, blurring and sharpening 3.6. Colouring
   3.7.Adding light and shadows
   3.8. Setting the pixel inversion threshold and image segmentation
4. Software coding of the Hough transformation for a line and a circle.

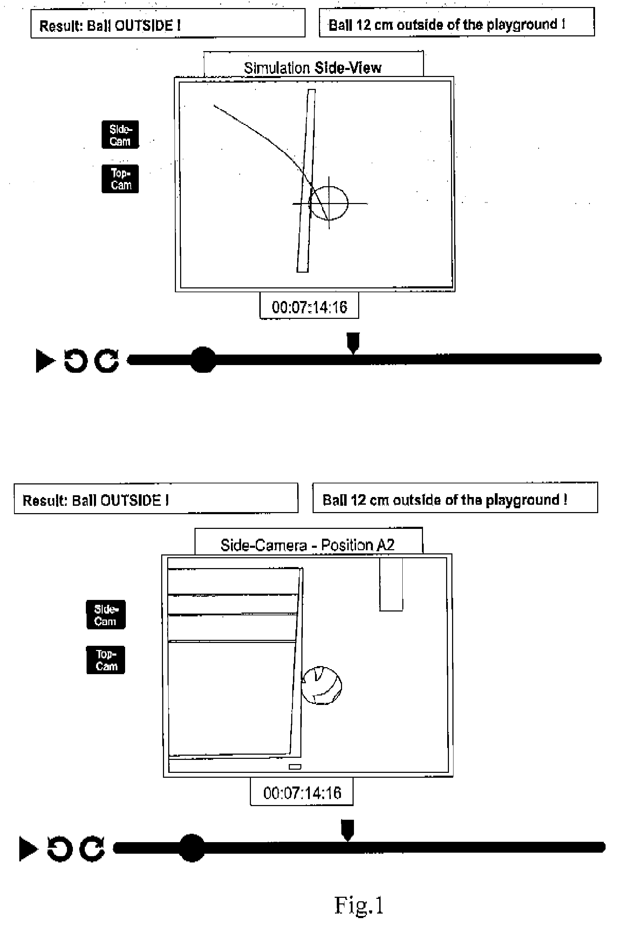

In the case of occurrence of the controversial situation of the ball-line type, the team that questions the decision requests for the video-based verification, the referee stops the game and allows for the verification. A second referee comes to the computer screen, while the computer user selects the marked recording portion and displays frame-by-frame the automatically processed two-panel sequence of video recording and simulation. The recording portions selected with special markers an the speed of the system allow for immediate access to the recording with all the relevant information within a matter of seconds and thus shorten the break time during the game in a significant way (Fig. 1).

Due to the specific shape of the ball's sphere outline, the resulting image is created in such a way that the computer that records the camera images eliminates the background as well as, other irrelevant information, focuses on the ball and subsequently almost immediately positions it and places its image back into the transmitted video stream. When the ball hits the playground, the hit point has the vertical coordinate equal to zero; at this point, the software selects the short frame sequence limited to the period of just before and just after this moment, which is then viewed in the frame-by-frame mode at the request of one of the teams with the referees. The simultaneous simulation of the ball hitting the ground is displayed synchronously on the second panel of the computer's screen and - based on the computer-calculated position of the hitting point of the ball against the border line - the system displays the message "The ball within the playground" or "The ball outside of the playground".

## Claims

1. The video-based verification system for the ball-line events for the referees of the netball matches, equipped with the cameras as well as image processing equipment, **characterised in that** first of all the positions of the ball in relation to the playground border line are calculated with the use of the Otsu algorithm (Module 3) as well as the image thresholds and its segmentation, and subsequently, on the basis of this algorithm, the resulting image is processed with the use of the computer with the Hough transformation for a line and a circle implemented (Module 4); afterwards the result of these calculations generates the final graphical image divided into two sections and presenting the real image of the ball hitting the playground near the border line and displaying the image on the referees' screen, whilst all these actions are done in real time during the match break.

2. The system according to claim 1, **characterised in that** the finally displayed screen message says either "The ball within the playground" or "The ball outside of the playground" and makes a correct prompt for the referee to make a final decision.

3. The system according to claim 1, **characterised in that** one part of the final screen is made of a true image of the ball hitting the ground in the vicinity of the border line, whilst the second part is made of a system-generated digital image pointing to the real position of the ball in relation to the border line of the playground.
